# EUROPEAN PATENT SPECIFICATION

(11) **EP 2 818 290 B1**
(45) Date of publication and mention of the grant of the patent: **14.12.2016**
(21) Application number: 14173308.9
(22) Date of filing: 20.06.2014
(51) Int. Cl.: B29B 7/44, B01F 7/00, B01F 3/18, F16D 1/10

(54) **Apparatus for mixing resins**
Vorrichtung zum Mischen von Harzen
Appareil de mélange de résines

(30) Priority: 24.06.2013 IT MO20130181
(43) Date of publication of application: 31.12.2014
(73) Proprietor: Piovan S.P.A., 30036 Santa Maria di Sala (VE) (IT)
(72) Inventor: Bellio, Enrico, 31050 Ponzano V.to (Treviso) (IT); Battaglia, Andrea, 35013 Cittadella (Padova) (IT)
(74) Representative: Pandolfi, Paolo

(56) References cited:
- EP-A2- 0 147 631
- DE-U1- 9 206 293
- DE-U1-202009 005 407
- JP-A- H0 227 935
- US-A- 209 195
- US-A- 742 168
- US-A- 1 699 916

## Description

The invention relates to apparatuses and systems for mixing or blending plastics made of granules and/or flakes or the like, associable with machines and plants for treating and transforming the aforesaid plastics, for example plants for plastic extruding and subsequently moulding by injection, blowing, compression.

Known mixing or blending apparatuses comprise a containing element, so-called mixing tank, that is able to receive and contain a quantity of different plastic products to be mixed, for example plastic resins, made of granules and/or flakes, and a mixing element fixed to and housed in the tank and provided with rotational and/or oscillatory motion around a respective axis.

Such mixing apparatuses can be associated and mounted on dosing machines provided with one or more dosing devices, of volumetric or gravimetric type, that is able to dispense predefined quantities of different plastic products into the mixing tank.

In some applications the mixing apparatuses can be used in the simplest form as only a mixing and/or blending member directly connected to plastics conveying systems that are not necessarily associated with dosing systems.

The dosing devices, which are in turn supplied by respective hoppers or reservoirs containing the materials, are located upstream of the mixing apparatus to permit the flow of the materials determined by the force of gravity. The dosing machines are then associated with transforming machines that are typically provided with extruders supplied by the mixture of products exiting the mixing apparatus.

The mixing element rotating and/or oscillating in the tank distributes and mixes the different plastic products made of granules and/or flakes, making a homogenous mixture that is suitable for subsequent treatments and/or transformation processes.

Known mixing elements comprise shafts provided with blades or arms shaped with a radial extent that are able to move and mix the different plastics together effectively. Mixing plastics made of granules and/or flakes with known mixing apparatuses entails a plurality of drawbacks.

In the case of mixtures of materials, typically consisting of plastic resins having a different chemical composition and/or geometry and/or form and/or density it is in fact very difficult to obtain homogeneous and uniform mixing, mainly because of phenomena of separation by gravity and segregation by shape of the different materials.

In the case of mixtures of materials consisting of plastic resins having different hardnesses, there is a high risk of breakage or shattering of the granules and/or the flakes, this phenomenon producing dusts that become hazardous in the subsequent extrusion process, causing the formation of burns and/or imperfections in the finished product.

In the case of mixtures of materials consisting of so-called low-melting plastic resins, i.e. plastic resins with a softening point close to ambient temperature, there is moreover a high risk of overheating through friction of the resins during the mixing and/or blending step.

The mixing elements have to be suitably studied and shaped like the mixing tanks to ensure optimal mixing. Nevertheless, such mixing elements and the corresponding tanks make the operations of ordinary and extraordinary cleaning and maintenance of known apparatuses particularly difficult and complex.

The mixing apparatuses have to be, in fact, thoroughly cleaned at the end of each production batch in order to eliminate residues of the plastic products that could hinder the correct operation of the apparatus (for example by arresting the movement of the mixing element) and/or contaminate the resin mixture of the next production batch. These operations are generally complex and laborious also for ensuring the security and safety of the operator and typically require dismantling of the mixing tank from the apparatus and from the dosing machine. The mixing tank with the corresponding mixing element can thus be emptied, cleaned and possibly washed separately.

Nevertheless, in many cases dismantling the tank is complex because of the installation and location of the mixing apparatus in the transforming machine, typically near the entry port of the extruder. This location makes access inconvenient and uncomfortable for the operator, tank assembling/dismantling operations difficult and obliges suitable safety systems to be adopted in order to adapt to the operations, which in certain situations may be repeated several times a day.

Moreover, if the mixing elements have to be replaced, for example because they are worn or unsuitable for the mixture being processed, specific tools and suitable assembling/dismantling manoeuvres that make the replacement procedure laborious and long are generally requested.

As in some applications the mixing tank is provided with a member for weighing and is thus fixed removably to the transforming machine and/or to the dosing machine, in particular it is connected to a containing structure of the latter, in the joining or connecting zone a significant quantity of material generally accumulates during the operation that does not fall inside the mixing tank coming from the dosing devices located upstream. Such a quantity of material, granules and/or flakes of plastic resins not only hinders the correct operation of the weighing apparatus and/or of the mixing apparatus (movement of the mixing element), but also escapes outside the machine, for example into the room in which the latter is located, when the tank is made accessible. Plastics are thus dissipated and cleaning operations are made necessary.

EP0147631 discloses a dry cement mixing installation.

DE9206293 describes a dosing device.

US209195 discloses a churn.

An object of the present invention is to improve known mixing apparatuses, in particular mixing apparatuses arranged for mixing plastics, typically resins, made of granules and/or flakes or the like, associable with machines and plants for treating and transforming the aforesaid plastics, for example injection or compression moulding plants.

Another object is to provide a mixing apparatus having a simple and compact structure that enables cleaning operations to be performed quickly, effectively and in a facilitated manner.

Still another object is to obtain a mixing apparatus that permits replacing and/or performing ordinary and/or extraordinary maintenance operations, also at a height, without the need to adopt specific and/or costly safety systems suitable to ensure the protection of the operator.

A further object is to obtain a mixing apparatus that permits rapid and easy replacing of a mixing element without any need for tools, at the same time ensuring the safety of the operator and avoiding possible assembling/dismantling errors.

A still further object is to make a mixing apparatus that ensures optimum homogeneous mixing also in the case of plastics made of granules and/or flakes and/or the like having a different chemical composition and/or geometry and/or shape and/or density.

Another further object is to make a mixing apparatus that avoids phenomena of breakage or crushing of the granules and/or flakes, in particular in the case of mixtures of materials consisting of plastic resins having different hardnesses, and thus avoids or reduces the creation of hazardous dusts through successive extrusion processes.

Another object is to make a mixing apparatus that avoids phenomena of overheating by friction of the materials during the mixing step, in particular in the case of mixtures of materials consisting of low-melting plastic resins, i.e. with a softening point close to ambient temperature.

These objects and yet others are achieved by a mixing apparatus according to one or more of the claims set out below.

The invention can be better understood and implemented with reference to the attached drawings that illustrate some embodiments thereof in which:
- figure 1 is a perspective view of the mixing apparatus of the invention associated with a dosing machine, which is partially illustrated;
- figure 2 is a cross section of the apparatus in figure 1;
- figure 3 is a plan view of the apparatus in figure 1 separated by the dosing machine and in an assembled configuration;
- figure 4 is a section along line IV-IV in figure 3;
- figure 5 is a section along line V-V in figure 3;
- figure 6 is a section along line VI-VI in figure 3;
- figure 7 is a section like the one in figure 4 in which the apparatus in figure 1 is in a dismantling configuration with a mixing element decoupled from a mixing tank;
- figure 8 is a perspective view of the apparatus in figure 7.

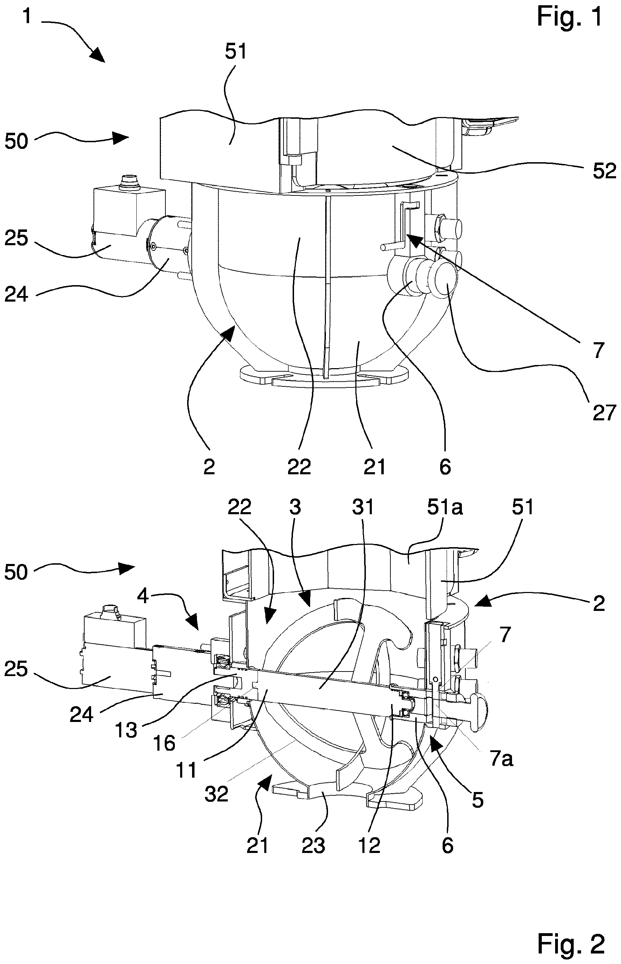

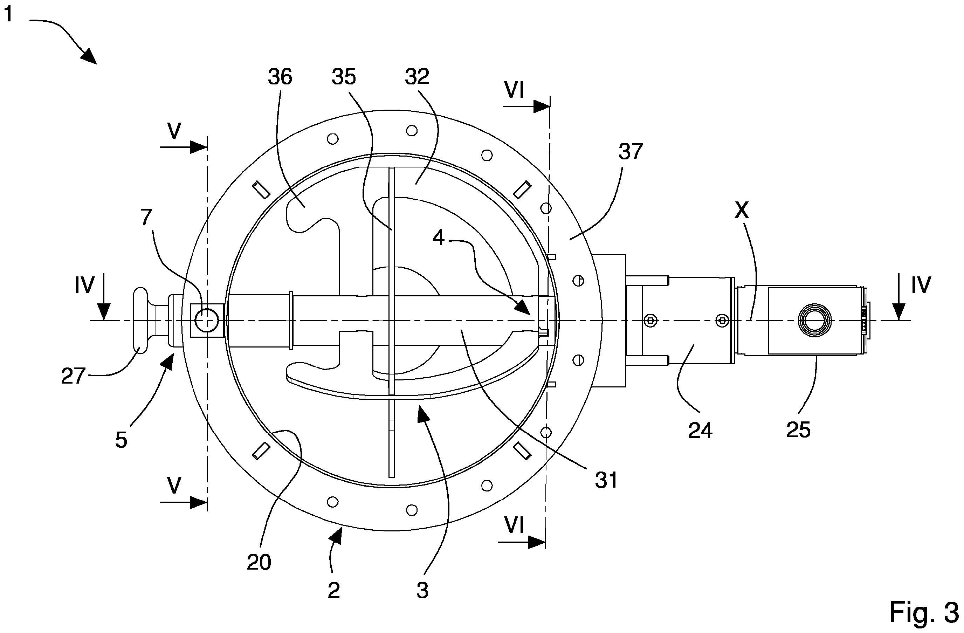

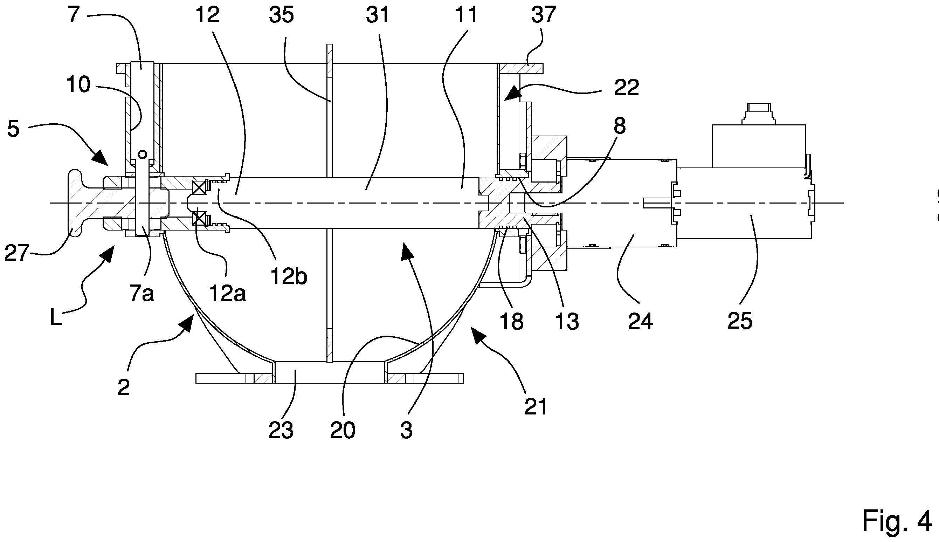

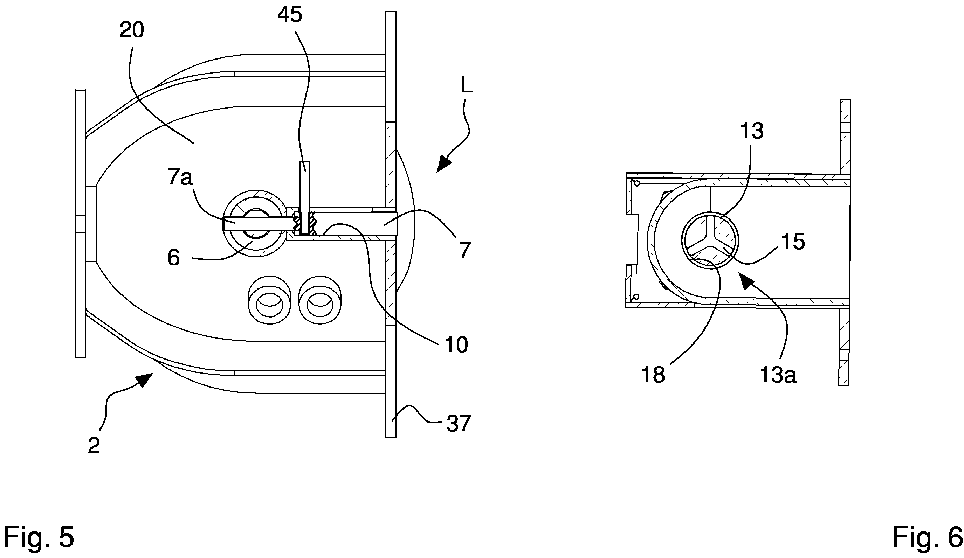

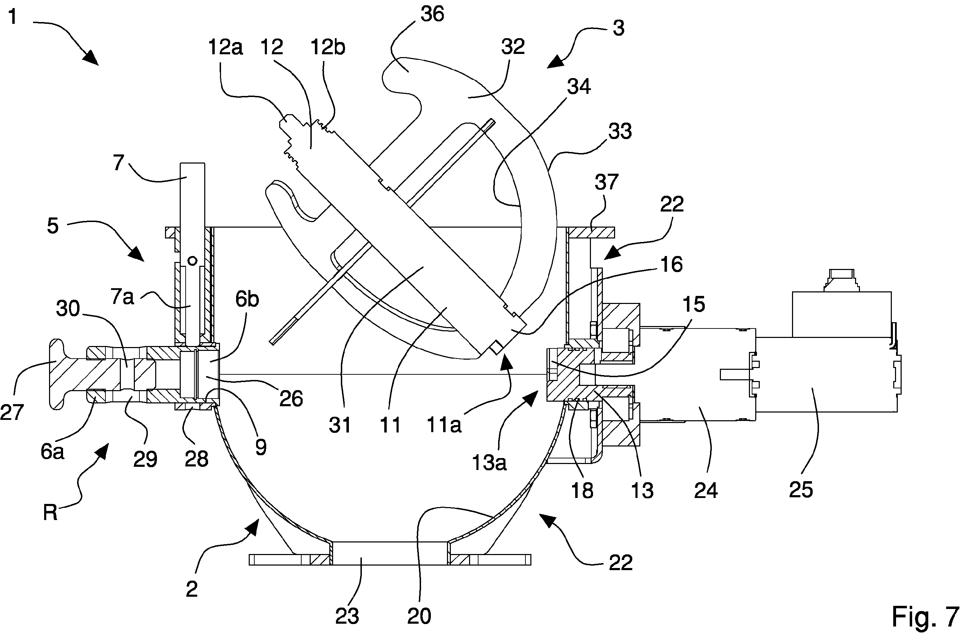

With reference to figures 1 to 8, a mixing apparatus 1 according to the invention is illustrated that is associable with a dosing machine 50 for mixing plastic products, in particular plastic resins, made of granules and/or flakes or the like and making a homogeneous mixture of the aforesaid plastic products with which to feed, for example, an extruding device of a plastic moulding plant.

The mixing apparatus 1 comprises a containing element 2, a so-called mixing tank, arranged for receiving and containing the plastic products that form a mixture to be mixed homogeneously and a mixing element 3 housed in the containing element 2 and rotatable around a rotation axis X so as to move and mix the plastic products.

The apparatus 1 comprises first coupling means 4 and second coupling means 5 fixed opposite each other, in particular facing and aligned, to a side wall 20 of the containing element 2 and arranged for receiving and coupling reversibly respectively with a first end 11 and at a second end 12 of the mixing element 3 to enable the latter to be assembled or dismantled from the containing element 2.

The mixing element 3, disclosed better further on in the description, comprises a supporting shaft 31 of elongated shape to which one or more mixing blades 32 are fixed. The first end 11 and the second end 12 of the mixing element 3 comprise the respective ends of the supporting shaft 31.

The first coupling means 4 includes a quick connection element 13 that is rotatable by actuating means 25 and is arranged for coupling with the first end 11 of the mixing element 3 in an assembling configuration A so as to rotate the latter around the rotation axis X and at the same time prevent movements of the first end 11 that are transverse to the aforesaid rotation axis X.

The connection element 13 in fact comprises a front wall 13a provided with engaging means 15 arranged for abutting on and engaging further engaging means 16 made on a respective front wall 11a of the first end 11. The engaging means 15 and the further engaging means 16 enables rotation torque to be transferred from the actuating means 25 to the mixing element 3.

In the illustrated embodiment, the engaging means 15 comprises three radial grooves that are angularly spaced apart by 120° with respect to a longitudinal axis and are made on the front wall 13a of circular shape of the quick connection element 13. The further engaging means 16 comprises corresponding radial ridges angularly spaced by 120°, made on the respective circular front wall 11a of the first end 11 and having a shape that is complementary to that of the radial grooves. It should be noted that when the ridges of the further engaging means 16 are engaged in the respective grooves of the engaging means 15, the first end 11 of the mixing element 3 is connected to the connection element 13 in such a manner that the movements that are transverse, in particular orthogonal, to the rotation axis X, are prevented.

The three grooves and the three ridges that are angularly spaced by 120° besides being dimensioned so as to transfer effectively the rotation torque from the actuating means 25 to the mixing element 3, enable easy coupling, as explained better further on in the description, of the mixing element 3 to the first coupling means 11 in the assembling step. The actuating means 25 comprises, for example, an electric and/or pneumatic motor provided with rotating and/or oscillating and/or pulsating motion connected to the connection element 13 by means of motion speed reducing means 24, fixed outside the containing element 2.

In one embodiment of the apparatus that is not illustrated the actuating means 25 is fixed directly to the connection element 13.

The connection element 13 connected to an output shaft of the motion reducing means 24 is rotatably inserted and supported in a first through seat 8, fixed to the side wall 20 of the containing means 2. An external side wall of the connection element 13 engaged in the first seat 8 has sealing means 18 that prevents the plastic products made of granules and/or flakes and/or powders escaping from the containing element 2.

The second coupling means 5 comprises bush means 6 fixed slidingly to the side wall 20 of the containing element 2 and movable linearly between a locking position L and a release position R. In the locking position L the bush means 6 rotatably engages the second end 12 of the mixing element 3 so as to prevent the movements of said mixing element 3 along, and transversely to, said rotation axis X. In the release position R the bush means 6 is disengaged and spaced apart from the second end 12 to enable the mixing element 3 to be dismantled or assembled on the containing element 2.

The bush means 6 comprises a cylindrical bush that is slidable in a second through seat 9 made on the side wall 20 along the rotation axis X. The bush 6 is aligned on and faces the connection element 13.

The bush 6 has a first end portion 6a provided with a housing 26 suitable for receiving and rotatably supporting the second end 12 of the mixing element 3. A second end portion 6b of the bush 6 is provided with a gripping pivot 27 for driving the bush 26 manually between the locking position L and release position R. The position of the gripping pivot 27 with respect to the bush 6 can be adjusted by an operator to compensate for possible assembly clearance of the mixing element 3.

Locking means 7 is provided for locking the bush means 6 in the locking position L.

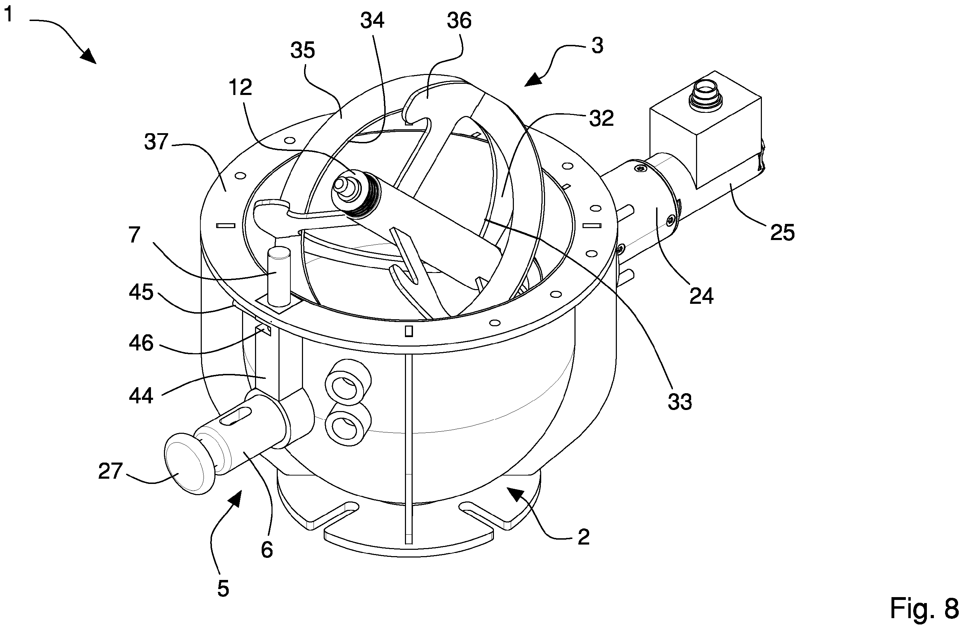

As illustrated in particular in figures 2 and 8, the locking means comprises a locking pivot 7 slidably fixed to the side wall 20 by a supporting element 44 and movable transversely to the rotation axis X so as to engage or disengage the bush 6 selectively when the bush 6 is in the locking position L. The locking pivot 7 is mounted slidably in a third seat 10 made in the supporting element 44 so that an operating end 7a thereof can be inserted and engage, through first through holes 28 and second through holes 29 made respectively in the second seat 9 and in the bush 6, in an arresting hole 30 made in the gripping pivot 27. When inserted and engaged in the arresting hole 30 of the gripping pivot 27, the locking pivot 7 prevents movements and rotations of the bush 6 that thus remains locked in the locking position L. The locking pivot 27 prevents in this manner the mixing element 3 being able to disengage accidentally from the bush 6 by a shift of the latter.

The locking pivot 7 is further provided with a transverse pivot 45 that extends transversely, in particular orthogonally to a longitudinal axis of said locking pivot 7 so as to enable the movement thereof by a user. By rotating the locking pivot 7 around the longitudinal axis thereof it is further possible to insert the transverse pivot 45 into a recess 46 of the supporting element 44, thus arresting the axial movement of the locking pivot in a raised position disengaged from the bush 6.

The second end 12 of the supporting shaft 3 has an end pivot 12a arranged for being inserted with reduced clearance into the housing 26, in particular coupling with a bearing, and a machined peripheral portion 12b that in cooperation with the housing 26 ensures a seal of the coupling that is such as to prevent plastic material made of granules escaping through the bush 6.

The side wall 20 of the containing element 2 comprises a bottom portion 21 having a substantially hemispherical shape and comprising an outflow opening 23 for the exit of the plastic products after mixing. Closing means that is known and not illustrated is provided for opening or closing the outflow opening 23.

The mixing element 3 in the illustrated embodiment comprises the supporting shaft 31 having an elongated cylindrical shape and a plurality of mixing blades 32, in particular four, fixed to the supporting shaft 31 angularly spaced apart from one another, for example by 90° and extend almost radially from said supporting shaft 31. Each mixing blade 32 has a flat shape and has a peripheral edge 33 having a semicircular arched profile and dimensions that are such as to engage the side wall 20 with reduced clearance, in particular the bottom portion 21 of the wall 20 during rotation of the mixing element 3, in an operating step of the mixing apparatus. Each mixing blade 32 further has a shaped and arched appendage 36 facing the second end 12 of the supporting shaft 31.

Each mixing blade 32 further comprises a through opening 34 having a circular sector shape.

The mixing element 3 is further provided with a circular ring 35 that is coaxial with the supporting shaft 31 that connects the mixing blades 32 together. The ring 35 has dimensions and a shape that are such as to engage the side wall 20, in particular the bottom portion 21 of the latter, with reduced clearance during rotation of the mixing element 3.

Owing to the shape of the blades 32 of the mixing element 3 and to the conformation of the containing element 2, which comprises a hemispherical bottom portion 21, it is possible to shake and mix in an optimum manner the plastic products so as to obtain homogeneous and uniform mixtures of materials even in cases in which the aforesaid materials have a different chemical composition and/or geometry and/or shape and/or density. The mixing apparatus 1 of the invention enables phenomena of separation by gravity and phenomena of segregation by shape of the different materials to be avoided. Numerous tests have shown that the shape and geometry of the blades 32 and of the containing element 2 prevent the formation within the latter of zones where materials accumulate or collect and they generate an effective undulating movement of the materials that are thus uniformly agitated and mixed. Another aspect observed is the reduction of crushing and generation of dust, in the case of materials consisting of plastic resins made of granules and/or flakes having different hardnesses. Such an undulating movement, with the same final mixing effect, enables the rotation speed of the mixing element 3 and mixing times to be reduced compared with known apparatuses, this causing less energy consumption and higher productivity.

It has been further observed that the mixing apparatus of the invention enables the phenomena of overheating by frictions of the materials during the mixing step to be avoided or greatly reduced, in particular in the case of mixtures of materials consisting of low-melting plastic resins, i.e. with a softening point close to ambient temperature.

The side wall 20 of the containing element 2 comprises an upper portion 22, having a substantially cylindrical shape and integral with the bottom portion 21. This upper portion 22 is fixable to a feeding manifold 51 of the dosing machine 50 arranged for conveying the plastics dispensed by dosing means of said dosing machine 50, of known type and not illustrated in the figures, inside the containing element 2. In particular, the side wall 20 is provided with an upper flange 37 that can be fixed to the feeding manifold 51. The latter, at the joining zone with the flange 37 of the containing element 2, has a cross section (with a plane parallel to the rotation axis X and substantially horizontal) having a shape (for example circular) and dimensions almost coinciding with the cross section of the upper portion 22 of the side wall 20 so that an inner wall 51a of the aforesaid feeding manifold 51 is substantially aligned on the aforesaid side wall 20. There being no gaps or fissures in the joining zone, all the plastic material is conveyed inside the containing element 2 without escapes or dispersion.

The feeding manifold 51 further has a hatch 52 that enables an operator to access the containing element 2 and to dismantle or assemble the mixing element 3 as explained below in the description.

The hatch 52 in the closed position prevents movement of the locking pivot 27 that remains engaged and locks in the locking position L the bush 6 of the second coupling means 12. With the hatch 52 in the closed position it is thus not possible to move the bushing 6 and disengage the mixing element 3 from the coupling means 11, 12.

The procedure of assembling the mixing element 3 provides for positioning the bush 6 in the release position R to enable an operator to insert manually the mixing element 3 inside the containing element 2 and engage the first end 11 of the supporting shaft 31 on the connection element 13 of the first coupling means 4.

Owing to the engaging means 15 and to the further engaging means 16 comprising respectively grooves and ridges, spaced angularly by 120° and made on the front walls 11a, 13a of the first end 11 and of the connection element 13 it is possible to make easy and rapid coupling.

With the first end 11 of the supporting shaft 3 maintained engaged on the first coupling means 4 the operator arranges the second end 12 at the second coupling means 5 and moves the bush 6 so that it engages with the first end 11. In particular, moving the bush 6 from the release position R to the locking position L, the end pivot 12a and the processed peripheral portion 12b of the first end 12 enter the housing 26 of the bush 6.

With the mixing element 3 correctly engaged in the first coupling means 4 and in the second coupling means 5 in the assembling configuration A, the operator arrests the bush 6 in the locking position L by the locking pivot 7. In this manner, the mixing element 3 is assured in the assembling configuration A and the mixing apparatus 1 is ready for operation.

The dismantling procedure involves the same operating sequences disclosed above to be followed in reverse order.

The mixing element 3 can thus be assembled or dismantled by the mixing apparatus 1 of the invention, for example replaced for ordinary or extraordinary maintenance, in a rapid, easy and simple manner by the operator, without requiring the use of tools.

It is moreover opportune to point out that once the mixing element 3 has been dismantled and removed the containing element 2 can be easily and rapidly cleaned by the operator because it already has a side wall 20 of cylindrical and spherical shape that is completely free.

The mixing apparatus 1 of the invention thus enables ordinary or extraordinary cleaning and/or maintenance operations to be performed without the need to dismantle the containing element 2 from the dosing machine 50, but simply by extracting the mixing element 3, i.e. enable the aforesaid operations to be simplified and above all enables the downtime of the apparatus and of the plant on which it is installed to be reduced.

It should be noted that, as the containing element 2 does not need to be dismantled, it can be fixed to the feeding manifold 51 of the dosing machine 50 so that in the junction zone between the flange 37 of the containing element 2 and the internal wall 51a of the aforesaid feeding manifold 51 there are no gaps and/or fissures in which the plastic material can accumulate descending from the dosing means and the plastic material can be conveyed entirely inside the containing element 2.

## Claims

1. Mixing apparatus, in particular associable with a dosing machine (50), for mixing plastic products made of granules and/or flakes, comprising a containing element (2) arranged for receiving and containing said plastic products, a mixing element (3) provided with a first end (11) and with a second end (12), housed in said containing element (2) and rotatable around a rotation axis (X) so as to move and mix said plastic products, and first coupling means (4) and second coupling means (5) fixed opposite each other to a side wall (20) of said containing element (2) and arranged for receiving and coupling reversibly respectively with said first end (11) and with said second end (12) of said mixing element (3) in such a manner as to enable the latter to be assembled or dismantled, ***characterised in that*** said side wall (20) comprises a bottom portion (21) having a substantially hemispherical shape, in particular said bottom portion (21) comprising an outflow opening (23) for exiting said plastic products after mixing, and said mixing element (3) comprises a supporting shaft (31) to which a plurality of mixing blades (32) are fixed which are angularly spaced apart from one another, which mixing blades (32) extend almost radially from said supporting shaft (31), wherein said mixing blades (32) have a flat shape and comprise a peripheral edge (33) having a curved shape and dimensions that are such as to engage said bottom portion (21) with reduced clearance during rotation of said mixing element (3), wherein each of said mixing blades (32) comprises a through opening (34) and a shaped and arched appendage (36) facing said second end (12) of said supporting shaft (31), wherein said mixing element (3) further comprises a ring (35) that is substantially coaxial to said supporting shaft (31) and connects said mixing blades (32), said ring (35) having a circular shape and dimensions that are such as to engage said bottom portion (21) with reduced clearance during the rotation of said mixing element (3).

2. Apparatus according to claim 1, wherein each of said through opening (34) has a circular sector shape.

3. Apparatus according to claim 1, or 2, wherein said mixing blades (32) are angularly spaced apart from one another by 90°.

4. Apparatus according to claim 1, wherein said first coupling means (4) comprises a connection element (13) rotated by actuating means (25) and arranged for coupling with said first end (11) of said mixing element (3) in an assembling configuration (A) in such a manner as to rotate the latter around said rotation axis (X) and prevent movements of said first end (11) that are transverse to said rotation axis (X).

5. Apparatus according to claim 4, wherein said connection element (13) comprises a respective front wall (13a) provided with engaging means (15) arranged for engaging further engaging means (16) made on a respective front wall (11a) of said first end (11).

6. Apparatus according to any preceding claim, wherein said second coupling means (5) comprises bush means (6) fixed slidably to said side wall (20) of said containing element (2) and movable between a locking position (L), wherein said bush means (6) rotatably engages said second end (12) and locks movements of said mixing element (3) along, and traverse to, said rotation axis (X), and a release position (R), wherein said bush means (6) is disengaged and spaced from said second end (12) to enable said mixing element (3) to be dismantled and removed from said containing element (2) or to enable said mixing element (3) to be assembled to said containing element (2).

7. Apparatus according to claim 6, comprising locking means (7) arranged for locking said bush means (6) in said locking position (L).

8. Apparatus according to claim 7, wherein said locking means (7) comprises a locking pin that is slidably fixed to said side wall (20) and is transversely movable to said rotation axis (X) in such a manner as to selectively engage or disengage said bush means (6) in the locking position (L).

9. Apparatus according to any preceding claim, wherein said side wall (20) of the containing element (2) comprises an upper portion (22) that is fixable to or forms a single body with a feeding manifold (51) of said dosing machine (50), said feeding manifold (51) being arranged for conveying said plastic products dispensed by dosing means of said dosing machine (50) inside said containing element (2).

10. Dosing machine for dispensing defined quantities of plastic products, in particular plastic resins in the shapes of granules and/or flakes, comprising a mixing apparatus (1) according to any preceding claim.

## Patentansprüche

1. Mischvorrichtung, die insbesondere mit einer Dosiermaschine (50) verbunden werden kann, zum Mischen von Kunststoffprodukten, die aus Körnern und/oder Flocken bestehen, mit einem Aufnahmeelement (2), das zum Empfangen und Aufnehmen der Kunststoffprodukte angeordnet ist, einem Mischelement (3), das mit einem ersten Ende (11) und mit einem zweiten Ende (12) versehen ist, das im Aufnahmeelement (2) untergebracht ist und um eine Drehachse (X) drehbar ist, um die Kunststoffprodukte zu bewegen und zu mischen, und einer ersten Kopplungseinrichtung (4) und einer zweiten Kopplungseinrichtung (5), die entgegengesetzt zueinander an einer Seitenwand (20) des Aufnahmeelements (2) befestigt sind und zum Aufnehmen und reversiblen Koppeln mit dem ersten Ende (11) und mit dem zweiten Ende (12) des Mischelements (3) in einer solchen Weise angeordnet sind, dass ermöglicht wird, dass das letztere montiert oder demontiert wird, **dadurch gekennzeichnet, dass** die Seitenwand (20) einen unteren Abschnitt (21) mit einer im Wesentlichen halbkugelförmigen Gestalt umfasst, wobei insbesondere der untere Abschnitt (21) eine Ausflussöffnung (23) zum Austritt der Kunststoffprodukte nach dem Mischen umfasst, und das Mischelement (3) eine Stützwelle (31) umfasst, an der eine Vielzahl von Mischschaufeln (32) befestigt sind, die im Winkel voneinander beabstandet sind, wobei die Mischschaufeln (32) sich fast radial von der Stützwelle (31) erstrecken, wobei die Mischschaufeln (32) eine flache Gestalt aufweisen und eine Umfangskante (33) mit einer gekrümmten Gestalt und Abmessungen umfassen, die derart sind, dass sie mit dem unteren Abschnitt (21) mit verringertem Zwischenraum während der Drehung des Mischelements (3) in Eingriff stehen, wobei jede der Mischschaufeln (32) eine Durchgangsöffnung (34) und einen geformten und gebogenen Anhang (36) umfasst, der dem zweiten Ende (12) der Stützwelle (31) zugewandt ist, wobei das Mischelement (3) ferner einen Ring (35) umfasst, der zur Stützwelle (31) im Wesentlichen koaxial ist und die Mischschaufeln (32) verbindet, wobei der Ring (35) eine kreisförmige Gestalt und Abmessungen aufweist, die derart sind, dass er mit dem unteren Abschnitt (21) mit verringertem Zwischenraum während der Drehung des Mischelements (3) in Eingriff steht.

2. Vorrichtung nach Anspruch 1, wobei jede der Durchgangsöffnung (34) eine Kreissektorgestalt aufweist.

3. Vorrichtung nach Anspruch 1 oder 2, wobei die Mischschaufeln (32) im Winkel um 90° von einander beabstandet sind.

4. Vorrichtung nach Anspruch 1, wobei die erste Kopplungseinrichtung (4) ein Verbindungselement (13) umfasst, das durch eine Betätigungseinrichtung (25) gedreht wird und zum Koppeln mit dem ersten Ende (11) des Mischelements (3) in einer Montagekonfiguration (A) in einer solchen Weise angeordnet ist, dass das letztere um die Drehachse (X) gedreht wird und Bewegungen des ersten Endes (11), die zur Drehachse (X) quer sind, verhindert werden.

5. Vorrichtung nach Anspruch 4, wobei das Verbindungselement (13) eine jeweilige Vorderwand (13a) umfasst, die mit Eingriffseinrichtungen (15) versehen ist, die zum Eingriff mit weiteren Eingriffseinrichtungen (16) angeordnet sind, die an einer jeweiligen Vorderwand (11a) des ersten Endes (11) hergestellt sind.

6. Vorrichtung nach einem vorhergehenden Anspruch, wobei die zweite Kopplungseinrichtung (5) eine Buchseneinrichtung (6) umfasst, die verschiebbar an der Seitenwand (20) des Aufnahmeelements (2) befestigt ist und zwischen einer Verriegelungsposition (L), in der die Buchseneinrichtung (6) drehbar mit dem zweiten Ende (12) in Eingriff steht und Bewegungen des Mischelements (3) entlang und quer zu der Drehachse (X) verriegelt, und einer Löseposition (R), in der die Buchseneinrichtung (6) vom zweiten Ende (12) gelöst und beabstandet ist, um zu ermöglichen, dass das Mischelement (3) vom Aufnahmeelement (2) demontiert und entfernt wird, oder zu ermöglichen, dass das Mischelement (3) am Aufnahmeelement (2) montiert wird, beweglich ist.

7. Vorrichtung nach Anspruch 6 mit einer Verriegelungseinrichtung (7), die zum Verriegeln der Buchseneinrichtung (6) in der Verriegelungsposition (L) angeordnet ist.

8. Vorrichtung nach Anspruch 7, wobei die Verriegelungseinrichtung (7) einen Verriegelungsstift umfasst, der verschiebbar an der Seitenwand (20) befestigt ist und zur Drehachse (X) in einer solchen Weise quer beweglich ist, dass die Buchseneinrichtung (6) in der Verriegelungsposition (L) selektiv in Eingriff gebracht oder gelöst wird.

9. Vorrichtung nach einem vorhergehenden Anspruch, wobei die Seitenwand (20) des Aufnahmeelements (2) einen oberen Abschnitt (22) umfasst, der an einem einzelnen Körper mit einem Zuführungsrohrverteiler (51) der Dosiermaschine (50) befestigbar ist oder diesen bildet, wobei der Zuführungsrohrverteiler (51) zum Befördern der Kunststoffprodukte, die durch die Dosiereinrichtung der Dosiermaschine (50) in das Aufnahmeelement (2) ausgegeben werden, angeordnet ist.

10. Dosiermaschine zum Ausgeben von definierten Mengen von Kunststoffprodukten, insbesondere Kunststoffharzen in den Formen von Körnern und/oder Flocken, mit einer Mischvorrichtung (1) nach einem vorangehenden Anspruch.

## Revendications

1. Appareil de mélange, en particulier associable à une machine de dosage (50) pour mélanger des produits en plastique faits de granules et/ou de paillettes, comprenant un élément de confinement (2) agencé pour recevoir et contenir lesdits produits en plastique, un élément de mélange (3) pourvu d'une première extrémité (11) et d'une seconde extrémité (12), reçu dans ledit élément de confinement (2) et pouvant tourner autour d'un axe de rotation (X) de manière à mettre en mouvement et mélanger lesdits produits en plastique, et des premiers moyens de couplage (4) et des seconds moyens de couplage (5) fixés les uns en face des autres à une paroi latérale (20) dudit élément de confinement (2) et agencés pour recevoir et se coupler de manière réversible respectivement à ladite première extrémité (11) et à ladite seconde extrémité (12) dudit élément de mélange (3) de telle manière à permettre à ce dernier d'être assemblé ou démonté, **caractérisé en ce que** ladite paroi latérale (20) comprend une partie de fond (21) ayant une forme sensiblement hémisphérique, en particulier ladite partie de fond (20) comprenant une ouverture d'écoulement de sortie (23) pour faire sortir lesdits produits en plastique après le mélange, et ledit élément de mélange (3) comprend un arbre de support (31) auquel une pluralité de pales de mélange (32) sont fixés qui sont angulairement espacées les unes des autres, lesquelles pales de mélange (32) s'étendent de manière pratiquement radiale depuis ledit arbre de support (31), dans lequel lesdites pales de mélange (32) ont une forme plate et comprennent un bord périphérique (33) ayant une forme incurvée et des dimensions qui sont telles qu'elles s'engagent dans ladite partie de fond (21) avec un jeu réduit pendant une rotation dudit élément de mélange (3), dans lequel chacune desdites pales de mélange (32) comprend une ouverture traversante (34) et un appendice conformé et en arc (36) dirigé vers ladite seconde extrémité (12) dudit arbre de support (31), dans lequel ledit élément de mélange (3) comprend en outre un anneau (35) qui est sensiblement coaxial audit arbre de support (31) et relie desdites pales de mélange (32), ledit anneau (35) ayant une forme circulaire et des dimensions qui sont telles qu'il s'engage dans ladite partie de fond (21) avec un jeu réduit pendant la rotation dudit élément de mélange (3).

2. Appareil selon la revendication 1, dans lequel chacune desdites ouvertures traversantes (34) a une forme de secteur circulaire.

3. Appareil selon la revendication 1 ou 2, dans lequel lesdites pales de mélange (32) sont angulairement espacées les unes des autres de 90°.

4. Appareil selon la revendication 1, dans lequel lesdits premiers moyens de couplage (4) comprennent un élément de liaison (13) mis en rotation par des moyens d'actionnement (25) et agencés pour un couplage avec ladite première extrémité (11) dudit élément de mélange (3) dans une configuration d'assemblage (A) d'une telle manière qu'il fait tourner ce dernier autour dudit axe de rotation (X) et empêche des mouvements de ladite première extrémité (11) qui sont transversaux audit axe de rotation (X).

5. Appareil selon la revendication 4, dans lequel ledit élément de liaison (13) comprend une paroi avant respective (13a) pourvue de moyens de prise (15) agencés pour venir également en prise avec des moyens de prise (16) réalisés sur une paroi avant respective (11a) de ladite première extrémité (11).

6. Appareil selon l'une quelconque des revendications précédentes, dans lequel lesdits seconds moyens de couplage (5) comprennent des moyens à bague (6) fixés de manière coulissante à ladite paroi latérale (20) dudit élément de confinement (2) et mobiles entre une position de blocage (L), dans laquelle lesdits moyens à bague (6) viennent en prise de manière rotative avec ladite seconde extrémité (12) et bloquent des mouvements dudit élément de mélange (3) le long dudit axe de rotation (X) et transversalement à celui-ci, et une position de libération (R), dans laquelle lesdits moyens à bague (6) sont désengagés et espacés de ladite seconde extrémité (12) pour permettre audit élément de mélange (3) d'être démonté et retiré dudit élément de confinement (2) ou pour permettre audit élément de mélange (3) d'être assemblé audit élément de confinement (2).

7. Appareil selon la revendication 6, comprenant des moyens de blocage (7) agencés pour bloquer lesdits moyens à bague (6) dans ladite position de blocage (L).

8. Appareil selon la revendication 7, dans lequel lesdits moyens de blocage (7) comprennent une goupille de blocage qui est fixée de manière coulissante à ladite paroi latérale (20) et est transversalement mobile par rapport audit axe de rotation (X) d'une telle manière qu'elle met en prise et libère sélectivement lesdits moyens à bague (6) dans la position de blocage (L).

9. Appareil selon l'une quelconque des revendications précédentes, dans lequel ladite paroi latérale (20) de l'élément de confinement (2) comprend une portion supérieure (22) qui peut être fixée à un corps unique ou forme celui-ci avec un collecteur d'alimentation (51) de ladite machine de dosage (50), ledit collecteur d'alimentation (51) étant agencé pour transporter lesdits produits en plastique distribués par des moyens de dosage de ladite machine de dosage (50) à l'intérieur dudit élément de confinement (2).

10. Machine de dosage pour distribuer des quantités définies de produits en plastique, en particulier des résines plastiques sous forme de granules et/ou de paillettes, comprenant un appareil de mélange (1) selon l'une quelconque des revendications précédentes.
